# EUROPEAN PATENT APPLICATION

(11) **EP 4 456 089 A1**
(43) Date of publication of application: **30.10.2024**
(21) Application number: 23170519.5
(22) Date of filing: 28.04.2023
(51) Int. Cl.: H01B 7/36, H01B 7/18

(54) **ELECTRICAL CABLE HAVING RETROREFLECTIVE AND PHOSPHORESCENT PROPERTIES**

(71) Applicant: Helkama Bica OY, 10960 Hanko Pohjoinen (FI)
(72) Inventor: MATTILA, Mikko, 20900 Turku (FI); ASPLUND, Martin, 21280 Raisio (FI)
(74) Representative: Boco IP Oy Ab

(57) **Abstract**

An electrical cable (1), comprising one or more conductors (2) each being provided with a respective, surrounding insulating layer (2a) for electrically insulating their respective conductor (2) from the remaining cable (1), and an outer sheath (5) surrounding at least the one or more conductors (5). The outer sheath (5) comprises a thermoplastic or thermoset matrix, in addition to retroreflective particles and phosphorescent particles, both uniformly distributed within the outer sheath (6). The retroreflective particles are of a distinct colour. The matrix of the outer sheath (5) is transparent or translucent, and is substantially free of dedicated colour pigments not forming a part of functional particles including the retroreflective particles, phosphorescent particles and fire-retardants.

## Description

### FIELD OF THE DISCLOSURE

The present disclosure relates to electrical cables, and more particularly to electrical cables adapted for use in low visibility environments and harsh conditions, such as in mining operations, particularly underground mining.

### BACKGROUND OF THE DISCLOSURE

In mining operations, particularly underground mines, machinery is often electrically operated in order to avoid exhaust gasses and fumes produced by combustion engines. To this end, associated electrical cables have been used for coupling the machinery to either a remote power source or a local power grid of the mine.

However, longevity of such electrical cables has been limited due to the harsh conditions prevalent in mining operations. Particularly, low visibility conditions during mining operations has frequently led to the electrical cables being run over or otherwise damaged by the personnel or machinery, simply because the electrical cable has not been properly or timely observed. In addition, electrical cables running along the ground or floor in low visibility conditions may increase the risk of operators tripping or falling.

Certain attempts have been made to improve the visibility of cables used in such conditions, but such prior art arrangements have been susceptible to wear caused by the extremely abrasive conditions prevailing in mines, or have impeded other desired characteristics of the cables, such as the fire-retardant properties thereof.

The ever-increasing electrification of mining equipment has consequently resulted in increased use of electrical power cables in mines, and prompted a need for an electrical cable better adapted for use in particularly mining applications. At the same time, mining operations have extended deeper below the ground into more demanding conditions, while greater focus has been placed on safety.

### BRIEF DESCRIPTION OF THE DISCLOSURE

An object of the present disclosure is to provide an electrical cable providing improved visibility in dark lighting conditions, while achieving longevity of the properties contributing improved visibility.

The object of the disclosure is achieved by an electrical cable which is characterized by what is stated in the independent claim. The preferred embodiments of the disclosure are disclosed in the dependent claims.

The disclosure is based on the idea of providing an electrical cable with an outer sheath comprising a transparent or translucent matrix, in addition to retroreflective particles and phosphorescent particles both uniformly distributed within the outer sheath. Moreover, the outer sheath is provided substantially free of dedicated colour pigments, while the retroreflective particles are of a distinct colour.

Multiple advantages follow - firstly, as the outer sheath is substantially free of dedicated pigments and the retroreflective particles are of a distinct colour, a corresponding distinct colour for the electrical cable is achieved without impeding the retroreflective or phosphorescent properties (i.e., no dedicated pigments blocking light from or visibility of said particles). At the same time, the retroreflective particles increase the visibility of the electrical cable in direct lighting conditions, and the phosphorescent particles improve the visibility of the electrical cable in in dark lighting conditions subsequent to a preceding illumination thereof. Moreover, as both the retroreflective particles and the phosphorescent particles are uniformly distributed in the outer sheath, the associated properties are not diminished over time as the outer sheath electrical cable wears. Consequently, as no separate protective layer is needed to protect the high-visibility characteristics of the electrical cable from wear, the provision of fire-retradant particles in the outermost portion the cable is enabled, thereby enabling good fire-retardant properties.

According to the present disclosure, an electrical cable is provided, comprising one or more conductors for conducting electrical current. The one or more conductors extend longitudinally along the length of the cable, and each of the one or more conductors are provided with a respective, surrounding insulating layer for electrically insulating their respective conductor from the remaining cable. Most suitably, such a conductor may be provided a plurality of strands made from aluminium or copper, for example.

The electrical cable further comprises an outer sheath extending along the length of the cable and surrounding at least the one or more conductors. That is, the outer sheath does not need to be in immediate contact with the one or more conductors (or associated insulating layers), but intermediate elements may be reside therebetween.

The outer sheath comprises a thermoplastic or thermoset matrix. For example, such a thermoplastic matrix may be provided as thermoplastic polyurethane, whereas such a thermoset matrix may be provided as a synthetic rubber, such as polychloroprene. Moreover, the matrix of the outer sheath is provided transparent or translucent, i.e., visible light is not completely blocked by the matrix, but may observed therethrough.

Particularly, the outer sheath further comprises retroreflective particles and phosphorescent particles, both uniformly distributed within the outer sheath. In other words, the both the retroreflective particles and the phosphorescent particles are distributed evenly along the length, circumference and depth of the outer sheath.

Moreover, the retroreflective particles are of a distinct colour. That is, the components of the retroreflective particles contributing to their visually observed colour are attached to said retroreflective particles. For example, the retroreflective particles may be made of a material having, on its own, such a distinctive colour, or the retroreflective particles may comprise colour pigments integrated in or adhered to the retroreflective particles. Moreover, the distinct colour achieved by the retroreflective particles may be provided by a mixture of retroreflective particles of different colours (e.g, a mixture of red and yellow retroreflective particles would result in orange distinct colour). Suitably, said distinct colour is chosen from a group of high-visibility colours including yellow, green, red or orange

Furthermore, the outer sheath is substantially free of dedicated colour pigments, which do not form a part of functional particles. Such functional particles may include retroreflective particles, phosphorescent particles and fire-retardants. Inversely, no dedicated colour pigments are freely present in the matrix of the outer sheath (i.e., on their own), but any such colour pigments are associated and attached, integrated in or adhered to functional particles.

In the context of this disclosure, the term dedicated colour pigment is used to describe a particle having the sole purpose of contributing a visually observable colour. Moreover, in the context of this disclosure, the term functional particle is used to describe a particle having a primary purpose of contributing a characteristic other than a visually observable colour. Examples of such functional particles include fire retardant particles, retroreflective particles and phosphorescent particles.

The electric cable according of the present disclosure provides for high visibility characteristics thereof in various lighting conditions, while providing improved wear resistance of these high visibility characteristics even in harsh conditions.

Particularly, the provision of retroreflective particles improves visibility of the electric cable in direct lighting conditions (e.g., when directly illuminated), as the light is reflected back generally towards the direction of illumination. This is particularly beneficial when the cable is used in environments where machinery equipped with working lights are operated in otherwise darkly light conditions.

Moreover, the provision of phosphorescence particles improves visibility of the electric cable dim or dark lighting conditions, subsequent to the electric cable being illuminated. This is also beneficial when the cable is used in environments where machinery equipped with working lights are operated in otherwise darkly light conditions, particularly at instances when the cable is not currently directly luminated such working lights.

In addition, as the outer sheath of the electrical cable has a distinct colour, it is also easily visually distinguishable from its surrounding in indirect lighting conditions (in an otherwise light environment, where the cable is not directly illuminated). Moreover, as the distinct colour of the outer sheath is achieved with the retroreflective particles being of a distinct colour, diminishing of retroreflective and/or phosphorescence properties is avoided. That is, as the outer sheath is substantially free of dedicated colour pigments, the presence of such colour pigments do not obstruct light emitted from or to the retroreflective and/or phosphorescence particles.

Due to the transparent or translucent nature of the outer sheath's matrix, improved retroreflective and phosphorescence characteristics are achieved for the electrical cable. Particularly, also retroreflective particles and phosphorescence particles underneath the surface of outer sheath may contribute to the retroreflective and phosphorescence characteristics of the electrical cable.

Moreover, the electrical cable according to the present disclosure maintains its characteristics (retroreflectivity, phosphorescence and visual colour) even when the outer sheath is subjected to substantial wear. This is, because the particles contributing to these characteristics are homogenously distributed within the matrix of the outer sheath. Consequently, as the surface of the outer sheath is worn, additional particles emerge from portions under the worn off surface.

By virtue of being easily detectable in various lighting conditions (and maintaining this capability for an extended period of time), the electrical cable according to the present disclosure promotes safety in low-light working conditions, such as underground mines. Particularly, the electrical cable according to the present disclosure reduces multiple risks, e.g., operators tripping over the cable, and operating equipment running into or over said cable.

In an embodiment according to the present disclosure, a ratio of the retroreflective particles to the phosphorescent particles by weight is between 0,5 - 1,5; preferably between 0,75 - 1,25 and more preferably 1.

This has been considered to provide a suitable balance between the retroreflective and phosphorescent characteristics of the electric cable.

In an embodiment according to the present disclosure, the amount of retroreflective particles in the outer sheath is between 1% - 15% by weight. Preferably, the amount of retroreflective particles in the outer sheath is between 2% - 10% by weight. More preferably the amount of retroreflective particles in the outer sheath is between 3% - 5% by weight. That is, the outer sheath may comprise an amount of retroreflective particles in ranges defined above, relative to the overall weight of the outer sheath.

Such amounts have been considered to provide a beneficial balance between achieving retroreflective properties, while maintaining sufficient structural properties of the outer sheath and avoiding diminishing of phosphorescent properties of the electrical cable.

In an embodiment according to the present disclosure, the retroreflective particles are of glass. Suitably, the retroreflective particles are of barium titanate glass and/or aluminium coated glass. Most suitably, the retroreflective particles are of aluminium coated barium titanate glass.

In an embodiment according to the present disclosure, the retroreflective particles are microspheres having a particle size of between 20µm - 100µm, preferably between 25µm - 50µm.

In the context of this disclosure, the term particle size is suitably used to describe an average particle size of a particle size distribution, e.g., D50.

In an embodiment according to the present disclosure, the retroreflective particles have a refractive index above 1,4, preferably above 1,5 and more preferably between 1,8 and 2. For example, the retroreflective particles may have a refractive index of 1,9.

In an embodiment according to the present disclosure, the amount of phosphorescent particles in the outer sheath is between 1% - 15% by weight. Preferably, the amount of phosphorescent particles in the outer sheath is between 2% - 10% by weight. More preferably, the amount of phosphorescent particles in the outer sheath is 3% - 5% by weight. That is, the outer sheath may comprise an amount of retroreflective particles in ranges defined above, relative to the overall weight of the outer sheath.

Such amounts have been considered to provide a beneficial balance between achieving phosphoresecent properties, while maintaining sufficient structural properties of the outer sheath and avoiding diminishing of retroreflective properties of the electrical cable.

In an embodiment according to the present disclosure, the phosphorescent particles are of strontium aluminate. Preferably, the phosphorescent particles are of europium doped strontium aluminate.

In an embodiment according to the present disclosure, the phosphorescent particles have a particle size of between 10µm - 40µm, preferably between 20µm - 30µm. Again, the term particle size is suitably used to describe an average particle size of a particle size distribution, e.g., D50.

In an embodiment according to the present disclosure, the phosphorescent particles have an excitation wavelength of between 100nm - 550nm. Preferably, the phosphorescent particles have an excitation wavelength of between 200nm - 450 nm.

In an embodiment according to the present disclosure, the phosphorescent particles have a wavelength peak value of between of between 450nm - 600nm. Preferably, the phosphorescent particles have a wavelength peak value of 520nm.

In an embodiment according to the present disclosure, the electrical cable further comprises an inner sheath or a filler layer intermediate to the outer sheath and the one or more conductors. Moreover, the inner sheath or filler layer extends along the length of the cable, and surrounds at least the one or more conductors. It should be noted that the inner sheath or the filler layer does not need to be directly on the one or more conductors or the insulating layers associated thereto, but other intermediate components may be provided therebetween.

Preferably, but not necessarily, the inner sheath or filler layer may be of a distinct colour. Suitably, the distinct colour of the inner sheath or filler layer is the same or similar to the distinct colour of the retroreflective particles. Suitably, the distinct colour of the inner sheath or filler layer is chiefly contributed by dedicated colour pigments.

Such an inner sheath may advantageously comprise a thermoplastic or thermoset matrix. For example, such a thermoplastic matrix may be provided as thermoplastic polyurethane, whereas such a thermoset matrix may be provided as a synthetic rubber, such as polychloroprene.

In an embodiment according to the present disclosure, the electrical cable further comprises an anti-torsion element for preventing unwinding of the one or more conductors. Such an anti-torsion element extends along the length of the cable, and surrounds at least the one or more conductors. Suitably, such an anti-torsion element is positioned between an outer sheath and an inner sheath of the electrical cable. Alternatively, or in addition, such an anti-torsion element may be provided directly surrounding the oner ore more conductors and their associated insulating layers. The anti-torsion element prevents torsional deformation of the electrical cable under tension by preventing the one or more conductors from unwinding and/or the consequent deformation of other components of the electrical cable (such as the outer sheath and/or the inner sheath) caused by longitudinal tension exerted on the cable.

Preferably, but not necessarily, such an anti-torsion element may be provided as continuous fibres or yarns in a weaved or braided pattern. Suitably, such fibres or yarns are of polyamide, although other materials may be used.

In an embodiment according to the present disclosure, the outer sheath of the electrical cable has a phosphorescent afterglow intensity of at least 0,1 Ix, as measured no less than 300 seconds after an excitation period of one minute at an intensity of 1200 Ix.

In an embodiment according to the present disclosure, the electrical cable has a flexibility allowing the cable to be reeled onto a reel of associated to mobile machinery, such as mobile mining equipment.

Preferably, but not necessarily, the one or more conductors have a maximum strand diameter of no more than 0,51 mm.

Preferably, but not necessarily the electrical cable conforms or exceeds the requirements of IEC 60228 class 5 or class 6.

Preferably, but not necessarily, the electrical cable conforms or exceeds the requirements of VDE 0295 class 5 or class 6.

It should be noted that the present disclosure encompasses any combination of two or more embodiments, or variants thereof, as discussed above.

### BRIEF DESCRIPTION OF THE DRAWINGS

In the following, the disclosure will be described in greater detail by means of preferred embodiments with reference to the accompanying drawings, in which:
Fig. 1 schematically illustrates a partial cut view of an electric cable according to an embodiment of the present disclosure, as seen as a perspective view;
Fig. 2 schematically illustrate a cross-sectional cut view of an electrical cable according to an embodiment of the present disclosure, and
Fig. 3 schematically illustrates a partial cut view of an electric cable according to another embodiment of the present disclosure, as seen as a perspective view.

### DETAILED DESCRIPTION OF THE DISCLOSURE

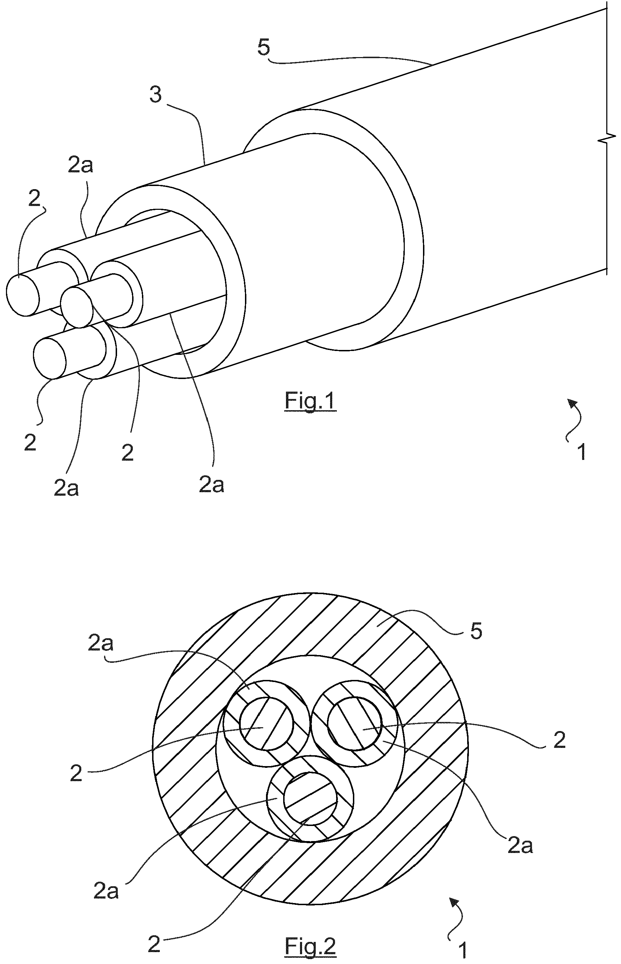

Fig. 1 is a schematical illustration of an electrical cable 1 according to an embodiment of the present disclosure. Notably, Fig. 1 illustrates the electrical cable 1 as a partial cut view, such that parts of the outer sheath 5, inner sheath 3, and insulating layers 2a have been removed so as to show respectively underlying entities.

Particularly, multiple conductors 2 are shown extending along the length of the electrical cable 1, each conductor being equipped with their respective insulating layer 2a, thus electrically insulating each of the conductors 2 from other components of the electrical cable 1. In the arrangement of Fig. 1 three conductors of identical cross-sectional area illustrated, although the electrical cable 1 may be provided with an alternative number of conductors of various cross-sectional areas. Although not shown in Fig.1, the conductors 2 each suitably comprise a plurality of strands. Moreover, although not shown in Fig. 1, the electrical cable may additionally comprise conductors of multiple different types, e.g., electrical conductors, optical conductors, etc.

Fig. 1 further depicts an inner sheath 3 surrounding the conductors 2 and extending along the length of the electrical cable 1. Furthermore, an outer sheath 5 is illustrated surrounding the inner sheath 3, and also extending along the length of the electrical cable 1.

Fig. 2, in turn, illustrates an electrical cable 1 according to another embodiment of the present disclosure, as seen as a cross-sectional cut view. Particularly, the electrical cable of Fig. 1 differs from that of Fig. 1 by not having an inner sheath. Instead, the outer sheath 5 directly surround the conductors 2 and their respective insulating layers 2a.

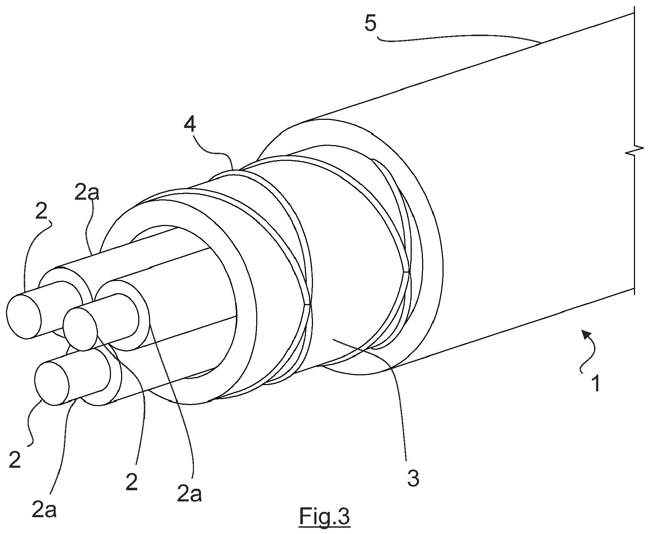

Fig. 3 is a schematical illustration of an electrical cable 1 according to a further embodiment of the present disclosure. In a similar manner as Fig. 1, also Fig. 3 illustrates the electrical cable 1 as a partial cut view, such that parts of the outer sheath 5, inner sheath 3, and insulating layers 2a have been removed so as to show respective underlying entities.

Particularly, the embodiment of Fig. 3 differs from that of Fig. 1 in that the anti-torsion element 4 is provided between the inner sheath 3 and the outer sheath 5.

### Example 1

In exemplary measurements, a sample of an outer sheath of an electrical cable was excited (i.e., illuminated) and the intensity of the afterglow was measured. To form the sample, an area section of the outer sheath was removed from the cable, and subsequently laid flat on a surface, where measurements were made.

The outer sheath of the sample comprises a matrix of translucent, thermoplastic polyurethane, in which phosphorescent particles and retroreflective particles are uniformly distributed. Particularly, the retroreflective particles were provided in the outer sheath as aluminium coated barium titanate glass particles at an amount of 3% by weight. The retroreflective particles have an indicated average particles size of between 25µm - 50µm and a yellow orange colour appearance.

Correspondingly, also the phosphorescent particles were provided in the outer sheath as europium doped strontium aluminate particles at an amount of 3% by weight. The phosphorescent particles have an indicated average particle size of 20-30 µm, an indicated excitation wavelength of between 200-450 nm and phosphorescent wavelength peak value of 520 nm.

Before each measurement, the sample was kept in darkness for a minimum of 15 minutes, which is considered sufficient to remove any noticeable effect of residual phosphorescent afterglow. The sample was then excited for one minute, which is considered a sufficient time for the phosphorescent properties of the sample to become saturated for a given illumination intensity. After excitation, the sample was rapidly transferred into darkness in the course of a few seconds, and the luminous intensity of the afterglow was measured at intervals of 2 seconds. Corresponding measurements were repeated with three different excitation intensities, namely 1 200 Ix, 6 000 Ix and 30 000 Ix. Measured phosphorescent afterglow intensities are listed below in Table 1 at 50 second intervals up to 300 seconds.

**Table 1 Measured phosphorescent afterglow intensities of an outer sheath sample**

| Measurement interval (s) | Excitation intensity (lx) | | |
|---|---|---|---|
| | 1 200 | 6 000 | 30 000 |
| 0 | 0,82 | 3,01 | 11,47 |
| 50 | 0,3 | 1,06 | 1,83 |
| 100 | 0,2 | 0,65 | 1,03 |
| 150 | 0,16 | 0,47 | 0,72 |
| 200 | 0,13 | 0,37 | 0,54 |
| 250 | 0,11 | 0,30 | 0,44 |
| 300 | 0,10 | 0,26 | 0,36 |
| | Measured phosphorescent afterglow intensity (lx) | | |

As can be seen, even at a modest initial excitation intensity at 1 200 Ix, a phosphorescent afterglow intensity of 0,1 Ix or above (which is considered to be clearly visible in dark conditions), was maintained for up to 300 seconds.

### LIST OF REFERENCES NUMERALS

- 1: electrical power cable
- 2: conductor
- 2a: insulating layer
- 3: inner sheath
- 4: anti-torsion element
- 5: outer sheath

## Claims

1. An electrical cable (1), comprising:
- one or more conductors (2) for conducting electrical current, said one or more conductors (2) extending longitudinally along the length of the cable (1), and each of said one or more conductors (2) being provided with a respective, surrounding insulating layer (2a) for electrically insulating their respective conductor (2) from the remaining cable (1), and
- an outer sheath (5) extending along the length of the cable (1), and surrounding at least the one or more conductors (5),
wherein the outer sheath (5), in turn, comprises a thermoplastic or thermoset matrix **characterized in that** the outer sheath (5) further comprises retroreflective particles and phosphorescent particles, both uniformly distributed within the outer sheath (6),
wherein the retroreflective particles are of a distinct colour,
wherein the matrix of the outer sheath is transparent or translucent, and
wherein the outer sheath (5) is substantially free of dedicated colour pigments not forming a part of functional particles including the retroreflective particles, phosphorescent particles and fire-retardants.

2. The electrical cable (1) according to claim 1, **characterized in that** a ratio of the amount of retroreflective particles by weight to the amount of phosphorescent particles by weight is between 0,5 - 1,5; preferably between 0,75 - 1,25 and more preferably 1.

3. The electrical cable (1) according to claim 1 or 2, **characterized in that** the outer sheath (5) comprises retroreflective particles in a range of between 1% - 15% by weight, preferably between 2% - 10% by weight and more preferably 3% - 5% by weight.

4. The electrical cable (1) according to any one of the preceding claims 1-3, **characterized in that** the retroreflective particles are of glass, suitably barium titanate glass, aluminium coated glass or aluminium coated barium titanate glass.

5. The electrical cable (1) according to any one of the preceding claims 1-4, **characterized in that** the retroreflective particles are microspheres having a particle size of between 20µm - 100µm, preferably between 25µm - 50µm.

6. The electrical cable (1) according to any one of the preceding claims 1-5, **characterized in that** the retroreflective particles have a refractive index above 1,4, preferably above 1,5 and more preferably between 1,8 and 2, such as 1,9.

7. The electrical cable according to any one of the preceding claims 1-6, **characterized in that** the outer sheath (5) comprises phosphorescent particles in a range of between 1% - 15% by weight, preferably between 2% - 10% by weight and more preferably 3%- 5% by weight.

8. The electrical cable (1) according to any one of the preceding claims 1-7, **characterized in that** the phosphorescent particles are of strontium aluminate, preferably europium doped strontium aluminate.

9. The electrical cable (1) according to any one of the preceding claims 1-8, **characterized by** one or more of the following:
the phosphorescent particles have a particle size of between 10µm - 40µm, preferably between 20µm - 30µm;
the phosphorescent particles have an excitation wavelength of between 100nm - 550nm; preferably between 200nm - 450 nm, and
the phosphorescent particles have a wavelength peak value of between of between 450nm - 600nm, preferably 520nm.

10. The electrical cable (1) according to any one of the preceding claims 1-9, **characterized by** further comprising an inner sheath (3) or a filler layer intermediate to the outer sheath (5) and the one or more conductors (2), wherein said inner sheath (3) or filler layer extends along the length of the cable (1), and surrounds at least the one or more conductors (5).

11. The electrical cable (1) according to claim 10, **characterized by** in that the inner sheath (3) or filler layer is of a distinct colour, the distinct colour of the inner sheath (3) or filler layer being preferably same or similar to the distinct colour of the retroreflective particles.

12. The electrical cable (1) according to any of the preceding claims 10 or 11, **characterized by** further comprising an anti-torsion element (4) for preventing unwinding of the one or more conductors (2), wherein the anti-torsion element (4) extends along the length of the cable (1), and surrounds at least the one or more conductors (5).

13. The electrical cable (1) according to claim 12, **characterized in that** the anti-torsion element (4) is provided as continuous fibres or yarns in a weaved or braided pattern, said fibres or yarns being preferably of polyamide.

14. The electrical cable (1) according to any one of the preceding claims 1-13, **characterized by** the outer sheath (5) having a phosphorescent afterglow intensity of at least 0,1 Ix, as measured no less than 300 seconds after an excitation period of one minute at an intensity of 1200 Ix.

15. The electrical cable (1) according to any one of the preceding claims 1-14, **characterized by** one or more of the following:
- the one or conductors (2) have a maximum strand diameter of no more than 0,51 mm;
- the electrical cable (1) conforms or exceeds the requirements of IEC 60228 class 5 or class 6, and
- the electrical cable conforms or exceeds the requirements of VDE 0295 class 5 or class 6.
